# FASCICULE DE BREVET EUROPEEN

(11) **EP 1 979 552 B1**
(45) Date de publication et mention de la délivrance du brevet: **29.04.2009**
(21) Numéro de dépôt: 06828085.8
(22) Date de dépôt: 12.12.2006
(51) Int. Cl.: E03B 1/04, C02F 1/00, E03C 1/01, E03D 1/22, E03D 1/34, E03D 5/00

(54) **INSTALLATION POUR LE RECYCLAGE D'EAUX SANITAIRES**
AUFBEREITUNGSANLAGE FÜR ABWASSER AUS SANITÄRANLAGEN
SANITARY WASTEWATER RECYCLING INSTALLATION

(30) Priorité: 16.01.2006 EP 06447010
(43) Date de publication de la demande: 15.10.2008
(73) Titulaire: Billon, Michel, 4030 Liege (BE)
(72) Inventeur: Billon, Michel, 4030 Liege (BE)
(74) Mandataire: pronovem
(86) Numéro de dépôt international: PCT/BE2006/000132
(87) Numéro de publication internationale: WO 2007/079552

(56) Documents cités:
- EP-A- 1 516 968
- WO-A-20/04057119
- DE-A1- 10 304 316
- FR-A- 2 620 151
- US-A1- 2001 049 841

## Description

### Objet de l'invention

La présente invention se rapporte à une installation de récupération ou de recyclage des eaux sanitaires usées provenant de la baignoire, de la douche, des éviers, etc., d'une habitation et de leur réutilisation pour le rinçage de cuvettes de WC, selon le préambule de la revendication 1.

### Etat de la technique

Dans les habitations, résidences, hôtels ou plus généralement dans un complexe immobilier quelconque, les installations sanitaires consomment une grande quantité d'eau courante, généralement potable, prélevée directement sur le réseau d'alimentation. En milieu urbain, la quantité d'eau courante utilisée et ainsi évacuée vers les égouts se chiffre en millions de litres, dont près de 80% sont consommés par les installations sanitaires et dont la moitié encore est utilisée uniquement pour le rinçage des WC. Ainsi, par exemple, chaque Européen utilise quotidiennement 120 litres d'eau potable. Sur ces 120 litres, 40 litres servent au rinçage des cuvettes de WC, soit l'équivalent de 6 chasses d'eau maximum. Cette utilisation d'eau courante est grevée d'un prix à la consommation de plus en plus élevé du fait des coûts d'épuration imposés par des contraintes environnementales de plus en plus sévères.

Indépendamment de son coût élevé, la continuité de la distribution d'eau est parfois critique dans certaines zones habitées ou certaines zones résidentielles à occupation saisonnière. De plus, nombre de régions du globe ne disposent pas ou disposent de manière très limitée de réserves naturelles d'eau. Et même dans les contrées riches en nappes aquifères se posent régulièrement des problèmes d'approvisionnement lors de longues périodes de sécheresse. Les spécialistes climatologues prévoient déjà que cette situation risque de devenir de plus en plus fréquente et critique au cours des prochaines décennies.

Il est dès lors primordial de pouvoir distribuer l'eau de manière rationnelle et surtout de pouvoir la consommer d'une manière raisonnable, sinon avec économie. Et d'autre part, il importe à cet effet que les habitations, résidences, complexes hôteliers et autres lieux analogues puissent être aménagés ou réaménagés suivant une conception rationnelle qui permette d'économiser l'eau. D'une façon générale, les eaux sanitaires sont déversées directement dans une conduite de collecte commune qui les évacue vers un réseau d'égouts. Non seulement, ce rejet d'eaux sanitaires représente une consommation élevée d'eau provenant du réseau de distribution mais encore les eaux ainsi rejetées contiennent également de nombreux produits résiduels qui contribuent à polluer l'environnement.

Outre la quantité d'eau courante utilisée pour l'hygiène corporelle, une grande quantité d'eau courante est donc également utilisée dans les chasses d'eau équipant les WC. Une économie importante en eau pourrait être réalisée en utilisant, pour le rinçage des cuvettes de toilettes, les eaux résiduaires récupérées dans les autres équipements sanitaires usuels de l'habitation ou du complexe résidentiel ou hôtelier et en n'utilisant de l'eau courante pour les cuvettes de toilettes que lorsqu'il n'y a plus d'eaux résiduaires disponibles.

Il est déjà connu de récupérer les eaux résiduaires pour effectuer le rinçage d'une cuvette de WC. Les eaux résiduaires sont collectées dans un réservoir de stockage que l'on raccorde au réservoir de chasse d'eau équipant habituellement les WC. Un système de ce genre impose des travaux de plomberie souvent coûteux et l'installation de tuyauteries souvent gênantes ou apparentes.

Des solutions plutôt théoriques ont été proposées en vue de la distribution d'eau pour le balayage d'évacuation d'une cuvette de WC en intégrant un recyclage d'eaux résiduaires dans un ensemble sanitaire pour toilettes, de type armoire-colonne, et en tenant compte de problèmes de fiabilité et de salubrité (voir par exemple EP-1 516 968, GB-A-611 893, GB-A-2 143 559, DE-A-16 09 218, etc.)

Plus particulièrement, le document WO-A-2004/057119 propose un système de recyclage d'eaux usées provenant par exemple d'un tub de douche, en particulier sous forme d'une chasse d'eau de WC économique, comprenant au moins un réservoir muni d'une soupape de chasse à flotteur, une conduite d'eau courante et une conduite d'eaux usées arrivant au réservoir. Le flotteur, monté pivotant au moyen d'une tige sur le côté du réservoir, peut se déplacer verticalement et peut actionner via un arbre l'ouverture d'une vanne située dans la conduite d'eau courante, lorsque le niveau d'eaux usées est insuffisant dans le réservoir. Plus précisément, le système est relié à une machine à laver, dont la puissance de la pompe principale a été gonflée par rapport à la pompe d'origine, cette pompe permettant d'acheminer les eaux usées de la machine à laver dans le réservoir. Une pompe additionnelle permet d'acheminer les eaux usées venant du tub de douche, éventuellement dans un autre réservoir. Chaque canalisation d'eaux usées présente un filtre situé entre la pompe correspondante et l'arrivée dans le réservoir.

Le recyclage des eaux usées de machine à laver n'est pas intéressant car celles-ci sont souvent davantage chargées en saleté et nauséabondes. De plus, elles contiennent généralement beaucoup plus de détergent et de mousse. Cela entraîne une formation importante de mousse dans le réservoir ainsi qu'un dépôt important dans le filtre et dans le réservoir.

L'utilisation de la pompe d'origine de la machine à laver pour le transfert des eaux usées vers la cuve n'est pas possible car elle ne peut relever l'eau que d'environ 1,2 m. Il est donc nécessaire de modifier cette pompe d'où la nécessité d'intervention sur une machine qui n'est pas prévue pour ces modifications, avec perte de la garantie octroyée par le fabricant.

Le placement de la seconde pompe dans la machine à laver n'est généralement pas possible car non prévu par le constructeur, ces modifications relevant davantage d'un bricolage de fortune que d'un système professionnel. Un blocage ou une panne du moteur de la seconde pompe entraînerait en outre l'impossibilité de vider la baignoire ou le tub de douche. De plus, la présence obligatoire d'une machine à laver près de la baignoire n'est pas un cas très répandu (c'est-à-dire buanderie et salle de bains côte à côte).

Par ailleurs, l'utilisation d'un filtre au-dessus de la cuve tampon n'est pas recommandé. Placé après la pompe, lorsqu'il s'encrasse, il freine l'écoulement et fait forcer la pompe 21 ou 31 jusqu'à un blocage de celle-ci. De plus, le filtre est placé au-dessus de la cuve, à un endroit caché derrière une paroi décorative d'où un accès difficile, voire même impossible. Le traitement des eaux usées se fait au niveau du filtre juste au-dessus de l'entrée de l'eau traitée dans la cuve. En sortie de filtre, l'écoulement se fait donc librement dans la cuve mais avec l'inconvénient de générer beaucoup de bruit et de mousse.

L'approvisionnement en eau courante est assuré par une vanne actionnée par un flotteur comme une chasse standard du commerce et le trop-plein de la cuve tampon se déverse de façon visible dans la cuvette de WC par un tuyau. Le document US 2001/0049841 A1 décrit un cabinet économique de WC pour empêcher le reflux de mauvaises odeurs dans le cabinet, pour utiliser de faibles quantités d'eau pour le rinçage de la cuvette, pour se laver les mains dans un évier après utilisation et pour diffuser un parfum après rinçage de la cuvette. Le cabinet de WC économique comprend un réservoir de rinçage pour stocker l'eau, une conduite de rinçage et un orifice de drainage de l'eau pour laver dans la partie supérieure, ainsi qu'une cuvette munie d'une ouverture dans la partie inférieure pour laisser s'échapper librement l'eau drainée directement vers la partie inférieure du cabinet de toilette. Un robinet est monté pivotant dans la partie inférieure de la cuvette pour ouvrir et fermer ladite ouverture. Des moyens d'ouverture du robinet et de fourniture d'eau évacuent l'eau usée en ouvrant une ouverture et en laissant l'eau s'écouler par l'orifice de drainage lorsque le robinet a suivi le mouvement de la pédale d'interruption d'eau. Des moyens de fermeture du robinet installés dans la partie inférieure de la cuvette permettent à l'entrée du robinet de se fermer lentement à intervalles réguliers grâce au robinet.
Le document FR-A-2 620 151 décrit une chasse d'eau pour WC permettant d'adapter la consommation d'eau aux besoins réels, caractérisée en ce que son réservoir dit principal contient un réservoir secondaire de capacité inférieure fixe, chacun des deux réservoirs ayant sa propre commande. Il est ainsi possible de choisir le volume des chasses d'eau en fonction des besoins.
Le document DE 103 04 316 A1 décrit un procédé pour la réduction d'environ 50% de la consommation d'eau d'une installation sanitaire et donc pour une diminution proportionnelle des coûts d'utilisation d'une telle installation. Selon le procédé, les canaux d'évacuation des eaux usées de la douche, de la baignoire, des éviers et du bidet sont nettoyés séparément du gros des impuretés grâce à un filtre. L'eau ainsi purifiée est pompée dans un réservoir de collecte au moyen d'une pompe à eau attenante. Le réservoir précité peut être réalisé sous le plafond ou dans un montage mural. Ainsi on réalise une construction qui économise de la place, par laquelle l'intervention dans toutes les installations sanitaires imaginales est possible et peut être adaptée. Les eaux usées se trouvant dans ledit réservoir peuvent être utilisées pour rincer un WC ou un urinoir.

### Buts de l'invention

La présente invention, voir l'installation décrite dans la revendication 1, vise à fournir une solution qui permette de s'affranchir des inconvénients de l'état de la technique.

L'invention vise à apporter une solution rationnelle et efficace au problème général de la distribution et de l'utilisation d'eau destinée aux toilettes dans une habitation ou un immeuble quelconque.

En particulier, l'invention vise à proposer une installation sanitaire qui optimise la distribution d'eau destinée à effectuer un rinçage d'évacuation d'une cuvette de WC avec intégration rationnelle d'un système économiseur d'eau.

Un autre but de l'invention est de proposer une solution qui maintient automatiquement une parfaite salubrité des installations sanitaires et préserve efficacement l'environnement.

Un autre but de l'invention est de fournir un système de chasse compatible avec l'installation précitée et en particulier une hauteur de colonne d'eau importante, ce système de chasse devant être à la fois fiable, résistant et silencieux.

Un autre but encore de l'invention est de proposer une installation sanitaire pour toilettes dont le fonctionnement et l'entretien peuvent être programmés en fonction des exigences de l'utilisateur.

Un autre but encore de l'invention est de proposer une unité sanitaire pour toilettes incorporant un système économiseur d'eau et pouvant être installée facilement dans une pièce d'habitation ou un local de dimensions courantes, sans nécessiter de travaux de plomberie importants et coûteux.

### Principaux éléments caractéristiques de l'invention

La présente invention se rapporte à une installation pour le recyclage d'eaux usées provenant d'un équipement sanitaire et pour la réutilisation de celles-ci dans le rinçage d'au moins une cuvette de WC, munie d'un système économiseur d'eau de rinçage surmontant le WC, ledit système économiseur comprenant un réservoir pouvant contenir une réserve d'eau, un mécanisme de chasse d'eau disposé dans le réservoir pour fournir l'eau de rinçage à la cuvette de WC, une première canalisation d'amenée desdites eaux usées dans le réservoir, une deuxième canalisation d'amenée d'eau courante dans le réservoir, un filtre et une pompe situés dans la première canalisation, un détecteur de niveau d'eau pour contrôler le niveau de la réserve d'eau résiduaire contenue dans le réservoir, une vanne d'arrêt commandée pour commander l'arrivée d'eau courante, ladite vanne d'arrêt étant normalement fermée et s'ouvrant temporairement lorsque la quantité d'eau contenue dans le réservoir et détectée par le détecteur de niveau d'eau est inférieure à une quantité prédéterminée, caractérisée en ce que le mécanisme de chasse d'eau comprend une soupape de vidange à actionnement vertical se trouvant à l'intérieur d'un tube de régulation de débit s'étendant sur toute la hauteur du réservoir et ne communiquant avec le reste du réservoir que par un ou plusieurs orifices percés dans la surface latérale dudit tube.

Des modes d'exécution préférés de la présente invention sont décrits dans les revendications subsidiaires 2 à 19.

### Brève description des figures

La figure 1A représente schématiquement une installation complète pour la récupération d'eaux sanitaires et le rinçage d'une cuvette de WC selon la présente invention.

Les figures 1B et 1C représentent des vues en élévation respectivement de côté et de face de la cuvette de WC et son réservoir.

La figure 2 représente une vue détaillée au niveau du réservoir, de côté et de face, de l'installation précitée.

Les figures 3 et 4 représentent schématiquement le système de récupération des eaux usées avec filtre et pompe, respectivement dans le cas d'une baignoire et d'une douche.

Les figures 5 et 6 représentent des formes d'exécution du terminal de contrôle de l'installation selon la présente invention.

La figure 7 représente une vue détaillée d'une forme d'exécution préférée de la chasse d'eau du WC selon la présente invention.

La figure 8 représente schématiquement un exemple de dispositif reliant la canalisation d'amenée d'eau courante dans le réservoir à une canalisation de collecte des eaux de pluie.

### Présentation de l'invention

La présente invention se rapporte à un nouveau système de récupération d'eau consommée lors de la toilette quotidienne d'une ou plusieurs personnes, que ce soit à partir d'une baignoire ou d'une douche. Cette eau est d'abord filtrée mécaniquement et chimiquement, colorée, parfumée et ensuite stockée dans un réservoir de 180 litres par exemple - ce qui est une contenance supérieure à celle d'une baignoire moyenne -, situé au même emplacement que le réservoir traditionnel selon l'état de la technique. Ce réservoir est simplement plus haut qu'un réservoir traditionnel, puisque de capacité nettement supérieure, mais ceci ne gêne nullement puisque l'espace excédentaire requis est rarement utilisé.

Les utilisations potentielles de l'invention sont les suivantes :
- rénovation de WC dans les habitations existantes : le système selon l'invention remplace le système de chasse existant sans encombrement supplémentaire et sans travaux importants d'aménagement. Il peut être incorporé dans une nouvelle gamme de meubles pour WC permettant par ailleurs un rangement pratique des accessoires de toilette ;
- nouvelles maisons ou habitations, nouveaux appartements : le réservoir peut être caché dans une gaine technique ;
- hôtels, où la consommation moyenne d'eau potable, soit 255 litres d'eau par jour et par chambre, est nettement supérieure à la consommation moyenne privée ;
- écoles et restaurants.

L'installation peut également être connectée aux lavabos et aux canalisations d'évacuation d'eau pluviale.

Le système est hybride. En cas de pénurie de l'eau de récupération, on peut utiliser en complément le réseau d'eau potable. Ce système est donc conçu pour ne jamais être inutilisable, ce qui conduit à une estimation de l'économie d'eau potable réalisée à 14 600 000 m³ par an et par million d'habitants (c'est-à-dire un tiers de la consommation actuelle). L'économie réalisée est à la fois directe (facture moins élevée suite à une consommation d'eau moindre) et indirecte (réduction des dépenses publiques pour l'épuration des eaux usées). La taxation sur l'eau consommée est réduite et la distribution de primes d'aide publique soutient l'investissement.

L'installation selon l'invention possède en outre un dispositif d'aspiration des odeurs, à la source, par la cuvette du WC qui les renvoie dans la gaine de ventilation existante ou prévue. Cette technique augmente le confort et améliore la ventilation du local. Le système fonctionne avec un détecteur de présence.

En outre, le système selon l'invention disposera avantageusement d'un système de commande soit pour le particulier, soit pour les hôtels, avec affichage numérique possible et supervision du système par une centrale.

Un système de pompe et filtre est placé sous la baignoire (ou la douche) à côté du syphon, dans le but d'éviter les bruits d'écoulement et la formation de mousse. Il est donc aisément accessible par la trappe d'accès. La baignoire ou la douche peut être distante du réservoir de plusieurs mètres. Enfin, la cuvette du WC suspendu est standard.

### Description d'une forme d'exécution préférée de l'invention.

L'invention a pour principe la récupération de l'eau usée ou « grise » provenant essentiellement du bain, de la douche, des lavabos, etc., pour le rinçage de la ou des cuvettes de WC de l'habitation.

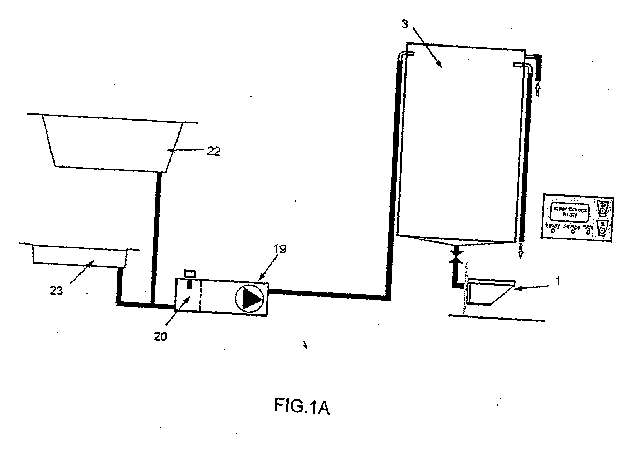

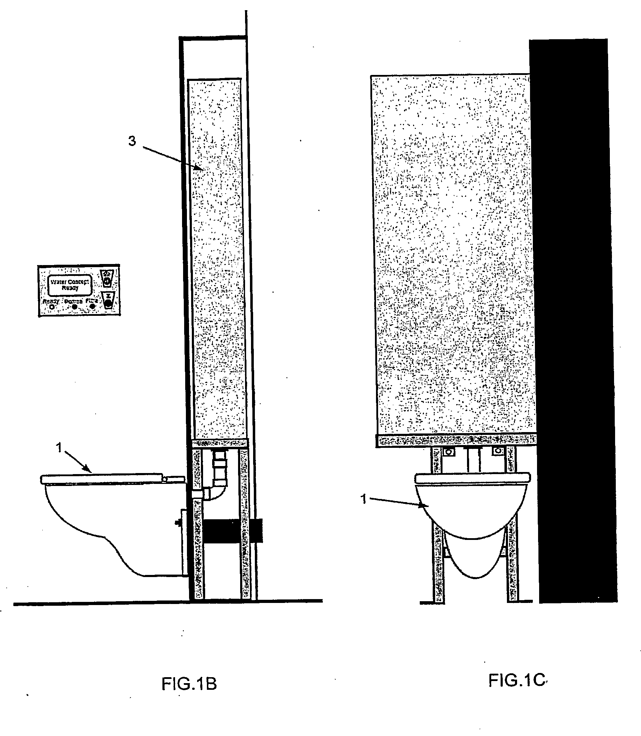

Comme représenté sur les figures 1A à 1C, le système selon l'invention est prévu avantageusement pour utiliser une cuvette de WC 1 suspendue.

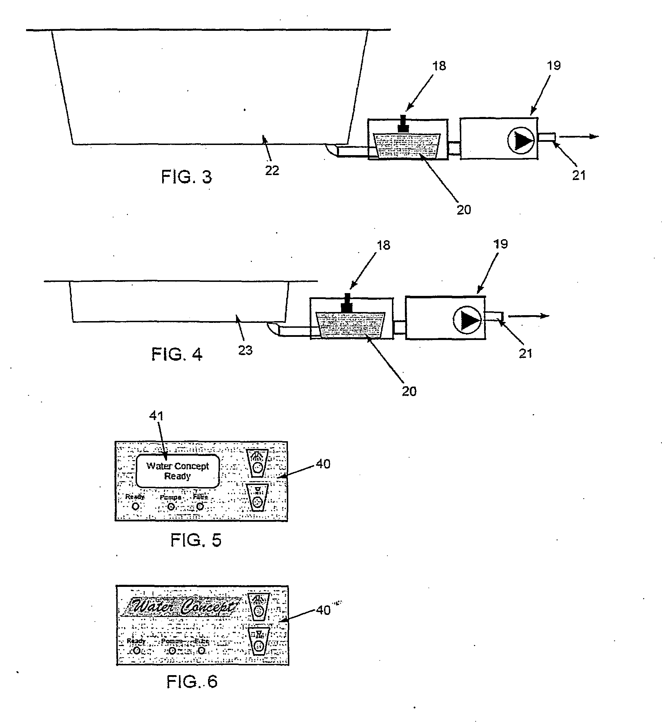

Partant de l'orifice d'évacuation de la baignoire 22 ou de la douche 23, le tuyau d'évacuation 21 venant du siphon de celles-ci entre dans un filtre (FIG.3 et 4). Ce filtre comprend un caisson en matière plastique (par exemple PVC, ABS, PE, etc.) de dimensions relativement réduites (par exemple 150 x 250 x 165 mm), un panier filtre 20 pour une filtration grossière (0,5 - 1 mm) et une élimination des particules telles que des cheveux, une sonde de niveau 18 à flotteur et contact « reed » permettant de donner l'alerte lorsque le filtre est colmaté et nécessite un nettoyage, ainsi qu'une sortie vers la décharge (non représentée) pour débordement lors d'une panne de pompe.

Le produit utilisé pour le traitement de l'eau grise est du type solide et est placé dans le panier filtrant 20 où il se dissout progressivement lors de la vidange du bain ou de la douche. Les fonctions du produit de traitement sont par exemple la coloration, la désinfection, le détartrage et l'ajout de produits déodorants.

La sortie du caisson de filtrage donne directement dans l'entrée d'une pompe 19. La pompe 19 est du type « pompe de relevage » de marque courante (Grundfos^{®}, SFA^{®} , etc.). La pompe 19 est équipée d'un contacteur de mise en route automatique dès que le niveau d'eau grise dépasse 55 mm, d'un clapet anti-retour et d'une mise à l'air. Bien entendu, le principe de l'invention reste le même si les deux caissons comprenant le filtre et la pompe sont réalisés en une seule pièce.

A la sortie de la pompe 19 se connecte le tuyau qui sera encastré dans la chape et dont l'autre extrémité sera connectée au tuyau d'entrée 7 dans la cuve de stockage 3.

De préférence, l'ensemble filtre/pompe est placé sous la baignoire 22 juste derrière la trappe technique de visite afin de présenter un accès aisé pour l'entretien. Dans le cas de la douche 23, l'ensemble est placé à côté de celle-ci dans un caisson adapté et comportant une trappe de visite ou encore dans un caisson disposé sous le tub de douche dans la chape. Dans certains cas, l'ensemble peut donc être encastré dans la chape.

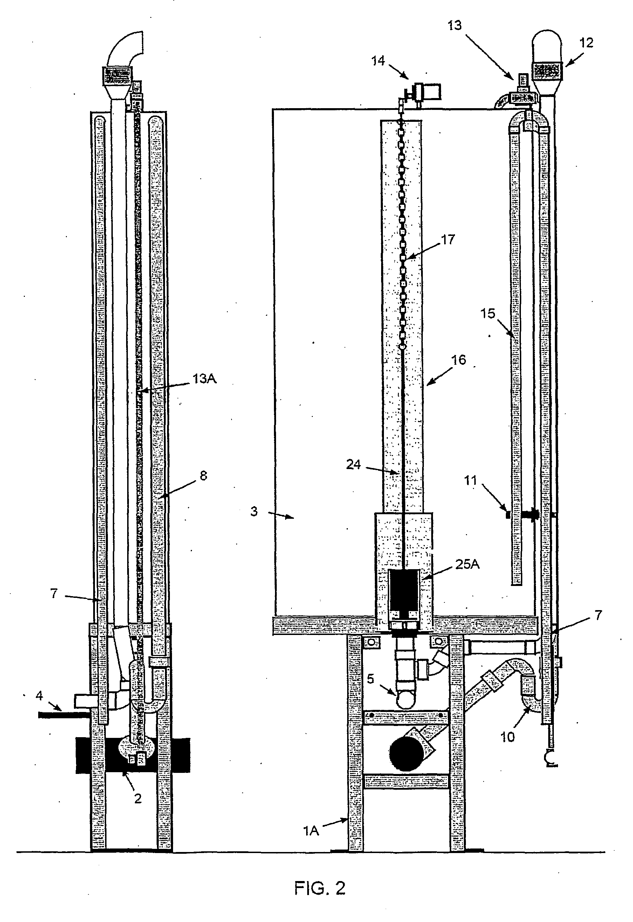

Comme représenté sur la figure 2, le tuyau d'arrivée 7 entre dans la cuve et se prolonge en une forme coudée dont l'extrémité 15 débouche dans le bas de la cuve dans le but d'éviter les bruits d'écoulement.

La cuvette de WC 1 est fixée à des tiges 4 du support 1A ; ce support étant fixé au sol et au mur placé derrière la cuve, il supportera donc la cuvette 1, le réservoir 3 et le tuyau de décharge 2.

Le réservoir 3 d'une capacité utile de 170 - 180 litres est en matière plastique (polyester ou polyéthylène par exemple). Dans le cas où ce réservoir alimente plusieurs cuvettes de WC, sa capacité peut bien sûr être augmentée. Il est percé des trous nécessaires au placement des tuyaux, sonde(s) et vannes.

Comme indiqué ci-dessus, le réservoir 3 est alimenté en eau grise par le tuyau 7. Lorsque, dans le réservoir 3, le niveau d'eau atteint le maximum permis en hauteur, l'eau est évacuée par le tuyau de trop-plein 8 dans le tuyau de décharge 2 via le siphon 10.

Un élément essentiel de la présente invention réside dans un mécanisme de chasse original. Celui-ci est construit au départ d'un mécanisme standard mais en présentant des modifications de renforcement de la chasse, car celle-ci doit faire face une hauteur manométrique d'eau beaucoup plus grande que dans le cas d'une chasse normale et à une formation de « coup de bélier » lors de la fermeture de la soupape, risquant d'endommager celle-ci beaucoup plus que dans une utilisation habituelle. D'autre part, cette chute d'eau importante apporte des nuisances sonores.

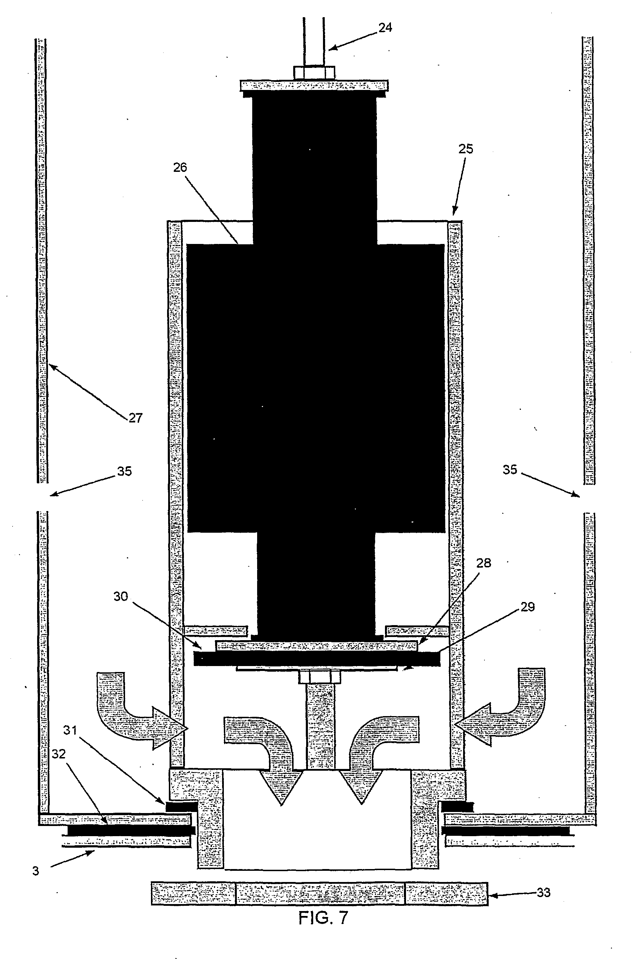

Comme représenté en détail sur la figure 7, la soupape 25A se compose d'un corps principal de guidage 25, essentiellement cylindrique, terminé par un filet et un écrou de fixation et serrage 33, d'un corps de soupape 26, d'un joint en EPDM 30 et d'un jeu de rondelles PVC et caoutchouc 28, 29 pour le montage de l'ensemble.

Afin de réguler le débit d'eau lors de son écoulement dans la cuvette de WC, un tube en PVC 27 percé d'au moins 2 trous 35 (de diamètre 8 mm par exemple) et de hauteur égale à la hauteur intérieure de la cuve 3, est fixé dans la cuve 3 par le corps de vanne 25, 33 et rendu étanche au moyen de joints d'étanchéité 31, 32. Ainsi, lorsque la cuve 3 est pleine ou lorsque la hauteur d'eau y est très importante, l'actionnement de la chasse provoque l'écoulement de l'eau se trouvant dans le tube 27. Cet écoulement est beaucoup plus rapide que le remplissage du tube par les trous 35, dû à la compensation de la chute de pression dans le tube, à cause du faible diamètre de ces trous. Ce système présente donc l'avantage de mettre à disposition une quantité d'eau juste nécessaire au bon fonctionnement de la chasse, entre le moment de l'ouverture et le moment de fermeture de la soupape. De plus, ce système présente l'avantage de réduire très fortement le bruit de la chasse.

La soupape de vidange est actionnée par un motoréducteur 14 (figure 2) équipé d'une came et de fins de courses de positionnement. Celui-ci soulève la soupape au moyen de la tige 24 et de la chaîne 17. Un levier de commande manuelle, non représenté, est placé au-dessus de la cuve pour actionner manuellement la soupape lors d'une panne de secteur.

Lorsque le niveau d'eau grise dans la cuve diminue et passe en dessous d'une valeur minimale prédéfinie, une sonde 11 enclenche une électrovanne 13 au niveau de la canalisation d'eau alimentaire 13A. Dès que l'eau grise est envoyée vers la cuve, le niveau remonte et l'arrivée d'eau alimentaire est arrêtée.

Le système est complété par une ventilation forcée 12 de la cuvette de WC.

L'ensemble du système est contrôlé par un terminal électronique 40 à micro-contrôleur.

Un exemple de terminal 40, représenté sur la figure 6, est encastrable et possède 2 boutons : un pour une chasse d'environ 8 litres, l'autre pour une chasse économique d'environ 3 litres. Il possède 3 voyants indiquant l'état du système et signale tout défaut du système. Le témoin « Ready » indique que le système est sous tension. S'il clignote, il signale un mauvais fonctionnement de la partie électronique. Le témoin « Pompe » s'allume lorsque la pompe est en défaut, le microcontrôleur contrôlant le courant absorbé par la pompe lorsqu'elle fonctionne. Le témoin « Filtre » s'allume lorsque le filtre nécessite un nettoyage.

Dans une version plus élaborée (figure 5), le terminal 40 possède un affichage LCD 41, par exemple de 2 x 16 caractères, ou graphique signalant l'état du système mais également prévu pour afficher des messages dans le cadre d'une utilisation dans les hôtels ou les collectivités.

Le système proposé dans le cadre de la présente invention présente de nombreux avantages sur les systèmes connus dans l'état de la technique et en particulier sur celui décrit dans le document WO-A-2.004/057119.

Selon l'invention, on utilise un filtre et une pompe standard de relevage qu'un plombier peut placer facilement sous la baignoire ou à côté de la douche. La présence d'un trop-plein au niveau du filtre garantit un fonctionnement en toute circonstance. L'accès à ces deux éléments se fait par la porte de visite placée du côté du siphon. Une sonde de niveau placée dans le caisson-filtre avertit qu'il est nécessaire de nettoyer le filtre.

Selon l'invention, le filtre est placé en amont de la pompe, évitant ainsi la surcharge de celle-ci et son blocage éventuel, en cas de colmatage du filtre. Le traitement de l'eau grise se fait donc au niveau du filtre, dans lequel l'eau est traitée depuis sa sortie de la baignoire ou de la douche jusqu'à la cuve tampon, tuyauterie comprise.

Le trop-plein de la cuve se déverse dans le tuyau d'évacuation du WC et non dans la cuvette.

La soupape de vidange est définie et actionnée par un motoréducteur et non par un système classique rudimentaire à flotteur.

Le dispositif selon l'invention peut comprendre un régulateur de débit constitué d'un tube spécial servant de réservoir.

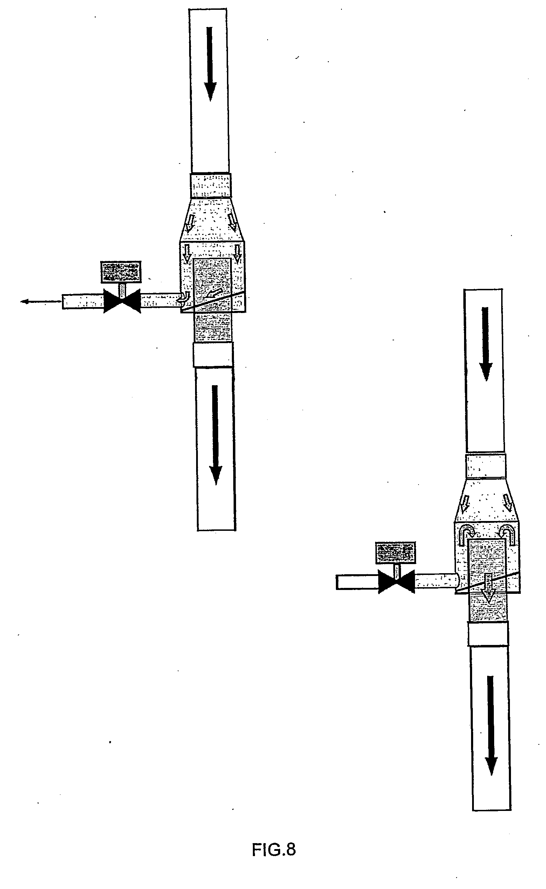

L'approvisionnement en eau alimentaire est contrôlée par une sonde et une électrovanne. Avantageusement, la canalisation d'amenée d'eau courante dans le réservoir peut être reliée, en amont de la vanne d'arrêt commandée, à un dispositif de collecte des eaux de pluie, comme représenté à titre d'exemple sur la figure 8, la vanne d'arrêt vers la canalisation d'amenée d'eau courante étant respectivement ouverte et fermée.

Le système selon l'invention est prévu pour une cuvette de WC suspendue, le support de cuve étant prévu pour recevoir à la fois le réservoir et la cuvette de WC.

Le système selon l'invention comporte une ventilation forcée de la cuvette de WC grâce à un ventilateur électrique.

Enfin, l'ensemble est contrôlé par un terminal électronique. Celui-ci contrôle la chasse, le remplissage avec l'eau alimentaire, la pompe et le filtre.

## Revendications

1. Installation pour le recyclage d'eaux usées provenant d'un équipement sanitaire (22, 23) et pour la réutilisation de celles-ci dans le rinçage d'au moins une cuvette de WC (1), muni d'un système économiseur d'eau de rinçage surmontant le WC, ledit système économiseur comprenant un réservoir (3) pouvant contenir une réserve d'eau, un mécanisme de chasse d'eau (25A, 24, 17, 14) disposé dans le réservoir (3) pour fournir l'eau de rinçage à la cuvette de WC (1), une première canalisation (21, 7, 15) d'amenée desdites eaux usées dans le réservoir (3), une deuxième canalisation (13A) d'amenée d'eau courante dans le réservoir, une filtre (18, 20) et une pompe (19) situés dans la première canalisation, un détecteur de niveau d'eau (11) pour contrôler le niveau de la réserve d'eau résiduaire contenue dans le réservoir, une vanne d'arrêt commandée (13) pour commander l'arrivée d'eau courante, **caractérisée en ce que** le mécanisme de chasse d'eau comprend une soupape de vidange (25A) à actionnement vertical se trouvant à l'intérieur d'un tube de régulation de débit (27) s'étendant sur toute la hauteur du réservoir (3) et ne communiquant avec le reste du réservoir (3) que par un ou plusieurs orifices (35) percés dans la surface latérale dudit tube (27).

2. Installation selon la revendication 1, **caractérisée en ce que** la soupape de vidange (25A) est commandée automatiquement par un actionneur.

3. Installation selon la revendication 2, **caractérisée en ce que** l'actionneur est un motoréducteur (14), relié à la soupape (25A) au moyen d'une tige (24) et d'une chaîne (17), et équipé d'une came et de fins de course de positionnement.

4. Installation selon la revendication 1, 2 ou 3, **caractérisée en ce que** le détecteur de niveau (11) comprend une sonde reliée à la vanne d'arrêt commandée (13) .

5. Installation selon l'une quelconque des revendications précédentes, **caractérisé en ce que** la première canalisation d'amenée des eaux usées est coudée de manière à présenter une sortie débouchant dans le fond du réservoir (3).

6. Installation selon l'une des revendications précédentes, **caractérisée en ce que** l'équipement sanitaire générant les eaux usées comprend au moins une baignoire, une douche, un lavabo ou une combinaison de ceux-ci, la capacité du réservoir (3) étant supérieure à 150 litres.

7. Installation selon la revendication 6, **caractérisée en ce que**, dans le trajet parcouru par les eaux usées entre l'équipement sanitaire (22, 23) et le réservoir (3), le filtre (18, 20) est situé en amont de la pompe (19).

8. Installation selon l'une quelconque des revendications précédentes, **caractérisé en ce que** le filtre comprend un panier filtre (20) pour une filtration grossière, une sonde de niveau (18) à flotteur et contact « reed » et une sortie vers la décharge pour les débordements.

9. Installation selon la revendication 8, **caractérisée en ce que** le panier filtre (20) contient un produit de préférence solide pour le traitement des eaux usées, qui se dissout progressivement lors de la vidange de l'équipement sanitaire.

10. Installation selon l'une quelconque des revendications précédentes, **caractérisé en ce que** la pompe (19) est une pompe de relevage équipée d'un contacteur de mise en route automatique dès qu'un niveau prédéterminé d'eau est atteint, d'un clapet anti-retour et d'une mise à l'air.

11. Installation selon l'une quelconque des revendications précédentes, **caractérisée en ce qu'**elle comprend un système de contrôle comprenant un terminal électronique à micro-contrôleur (40).

12. Installation selon la revendication 11, **caractérisée en ce que** le système de contrôle comprend des moyens pour régler ou modifier le volume d'eau fourni par l'actionnement de la chasse d'eau.

13. Installation selon la revendication 11, **caractérisée en ce que** le système de contrôle comprend des moyens pour contrôler le remplissage du réservoir avec de l'eau courante ou des eaux usées et pour vérifier et afficher l'état de la partie électronique de l'installation, de la pompe et du filtre.

14. Installation selon la revendication 11, **caractérisée en ce que** le terminal (40) comprend un affichage (41), par exemple à cristaux liquides, permettant l'affichage de messages.

15. Installation selon la revendication 11 ou 12, **caractérisée en ce que** le système de contrôle est programmé pour commander périodiquement l'actionneur de la soupape de vidange (25A).

16. Installation selon l'une quelconque des revendications précédentes, **caractérisée en ce que** la première canalisation d'amenée des eaux usées comprend un régulateur de débit.

17. Installation selon l'une quelconque des revendications précédentes, **caractérisé en ce qu'**elle comprend une canalisation supplémentaire (8) pour déverser le trop-plein du réservoir (3) directement dans un tuyau d'évacuation du WC (2).

18. Installation selon l'une quelconque des revendications précédentes, **caractérisée en ce que** la deuxième canalisation d'amenée d'eau courante dans le réservoir est reliée, en amont de la vanne d'arrêt commandée (13), à un dispositif de collecte des eaux de pluie.

19. Installation selon l'une quelconque des revendications précédentes, **caractérisé en ce que** la cuvette de WC est reliée à un dispositif de ventilation forcée (12).

## Claims

1. Installation for recycling waste water from a sanitary equipment (22,23) and for reusing it to flush at least one toilet bowl (1), equipped with a system for saving flushing water fitted over the toilet, said water-saving system comprising a tank (3) that may comprise a water storage, a water-flushing mechanism (25A,24,17,14) positioned in the tank (3) to provide the water for flushing the toilet bowl (1), a first pipe (21,7,15) for supplying said waste water to the tank (3), a second pipe (13A) for supplying the running water to the tank, a filter (18,20) and a pump (19) positioned in the first pipe, a water-level sensor (11) to control the level of used-water remaining in the tank, a controlled stop valve (13) to control the intake of running water, **characterised in that** the water-flushing mechanism comprises a vertical-action drain valve (25A) positioned inside a flow-control tube (27) that extends over the entire height of the tank (3), and only connected to the rest of the tank (3) by one or more apertures (35) drilled in the side of said tube (27).

2. Installation according to Claim 1, **characterised in that** the drain valve (25A) is automatically controlled by an actuator.

3. Installation according to Claim 2, **characterised in that** the actuator is a geared motor (14) linked to the valve (25A) by means of a rod (24) and of a chain (17), and equipped with a cam and with positioning end stops.

4. Installation according to Claim 1, 2 or 3, **characterised in that** the level sensor (11) comprises a probe connected to the controlled stop valve (13).

5. Installation according to any of the preceding claims, **characterised in that** the first pipe for supplying waste water is bent so as to provide an outlet exiting at the bottom of the tank (3).

6. Installation according to any of the preceding claims, **characterised in that** the sanitary equipment generating the waste water comprises at least a bathtub, a shower, a washbasin or a combination of these, the capacity of the tank (3) being over 150 litres.

7. Installation according to Claim 6, **characterised in that**, in the path of the waste water between the sanitary equipment (22,23) and the tank (3), the filter (18,20) is positioned upstream from the pump (19).

8. Installation according to any of the preceding claims, **characterised in that** the filter comprises a filter cage (20) for coarse filtering, a level probe (18) with a float and "reed" contact, and an outlet towards the discharge for overflows.

9. Installation according to Claim 8, **characterised in that** the filter cage (20) comprises a preferably solid product for treating waste water that progressively dissolves when the sanitary equipment is drained.

10. Installation according to any of the preceding claims, **characterised in that** the pump (19) is a lift pump equipped with a switch for automatic start-up as soon as a predetermined level of water is reached, a flapper and a vent.

11. Installation according to any of the preceding claims, **characterised in that** it comprises a control system comprising an electronic terminal with a microcontroller (40).

12. Installation according to Claim 11, **characterised in that** the control system comprises a means for regulating or adjusting the volume of water provided by the activation of the flush.

13. Installation according to Claim 11, **characterised in that** the control system comprises a means for controlling the filling of the tank with running water or with waste water and for checking and displaying the status of the electronic part of the installation, pump and filter.

14. Installation according to Claim 11, **characterised in that** the terminal (40) comprises a display (41), for example a liquid crystal display, that allows to display messages.

15. Installation according to Claim 11 or 12, **characterised in that** the control system is programmed so as to periodically operate the actuator of the drain valve (25A).

16. Installation according to any of the preceding claims, **characterised in that** the first pipe for supplying waste water comprises a flow regulator.

17. Installation according to any of the preceding claims, **characterised in that** it comprises an additional pipe (8) for releasing the overflow from the tank (3) directly into a drain pipe of the toilet (2).

18. Installation according to any of the preceding claims, **characterised in that** the second pipe for supplying running water to the tank is connected, upstream from the controlled stop valve (13), to a device for collecting rainwater.

19. Installation according to any of the preceding claims, **characterised in that** the toilet bowl is connected to a forced ventilation device (12).

## Patentansprüche

1. Anlage für die Wiederaufbereitung von aus einem Bestandteil einer Sanitärinstallation (22, 23) stammendem Schmutzwasser sowie zur Wiederverwertung dieses Schmutzwassers für das Spülen von mindestens einem WC-Becken (1), ausgestattet mit einem Wassersparsystem für die Spülung, das über dem WC eingebaut ist, wobei dieses besagte Wassersparsystem einen Behälter (3) beinhaltet, der einen Wasservorrat, einen im Behälter (3) angeordneten Spül-/Abzugsmechanismus (25A, 24, 17, 14) zur Bereitstellung des Spülwassers für das WC-Becken (1), eine erste Rohrleitung (21, 7, 15) zur Weiterleitung des besagten Schmutzwassers in den Behälter (3), eine zweite Rohrleitung (13A) für die Zufuhr von Leitungswasser in den Behälter, einen Filter (18, 20) sowie eine Pumpe (19), die sich in der ersten Rohrleitung befindet, einen Wasserstandsfühler (11), um den Wasserstand des im Behälter vorhandenen Restwassers zu steuern sowie ein gesteuertes Absperrventil (13,) um den Zulauf von Leitungswasser zu steuern, umfassen kann und **dadurch gekennzeichnet ist, dass** der Spül-/Abzugsmechanismus ein Abflussventil (25A) mit vertikaler Wirkrichtung umfasst, das sich im Inneren einer Leitung zur Durchflussregulierung (27) befindet, die sich über die gesamte Höhe des Behälters (3) erstreckt und nicht mit dem Rest des Behälters (3) außer über eine oder mehrere Mündungsöffnungen (35) verbunden ist, die an der seitlichen Oberfläche der besagten Leitung (27) angebracht sind.

2. Anlage gemäß dem Anspruch 1, **dadurch gekennzeichnet, dass** das Abflussventil (25A) automatisch über ein Stellglied gesteuert wird.

3. Anlage gemäß dem Anspruch 2, **dadurch gekennzeichnet, dass** es sich bei dem Stellglied um einen Getriebemotor (14) handelt, der mit dem Ventil (25A) über eine Stange (24) sowie eine Kette (17) verbunden ist und mit einem Nocken und Endpunkten für den Positionierungsverlauf ausgestattet ist.

4. Anlage gemäß den Ansprüchen 1, 2 oder 3, **dadurch gekennzeichnet, dass** der Wasserstandsfühler (11) eine Sonde beinhaltet, die mit dem gesteuerten Absperrschieber (13) verbunden ist.

5. Anlage gemäß einem der vorherigen Ansprüche, **dadurch gekennzeichnet, dass** die erste Rohrleitung für die Zufuhr des Schmutzwassers über ein Kniestück in einer Weise angeschlossen ist, dass sich ein Ausgang ergibt, der in den Boden des Behälters (3) mündet.

6. Anlage gemäß einem der vorherigen Ansprüche, **dadurch gekennzeichnet, dass** der das Schmutzwasser erzeugende Bestandteil der Sanitärinstallation mindestens eine Badewanne, eine Dusche, ein Waschbecken oder eine Kombination dieser Teile beinhaltet, wobei das Fassungsvermögen des Behälters (3) mehr als 150 1 beträgt.

7. Anlage gemäß dem Anspruch 6, **dadurch gekennzeichnet, dass** sich in der vom Schmutzwasser durchlaufenen Strecke zwischen dem Bestandteil der Sanitärinstallation (22, 23) und dem Behälter (3), der Filter (18, 20) vor der Pumpe befindet (19).

8. Anlage gemäß einem der vorherigen Ansprüche, **dadurch gekennzeichnet, dass** der Filter einen Filterkorb (20) für eine Grobfilterung, eine Wasserstandssonde (18) in Form eines Schwimmers und eines Reed-Kontakts sowie einen Ausgang zum Ablass für den Überlauf beinhaltet.

9. Anlage gemäß dem Anspruch 8, **dadurch gekennzeichnet, dass** der Filterkorb (20) ein vorzugsweise festes Produkt zur Aufbereitung des Schmutzwassers enthält, das sich nach und nach beim Ablassen des Bestandteils der Sanitärinstallation auflöst.

10. Anlage gemäß einem der vorherigen Ansprüche, **dadurch gekennzeichnet, dass** es sich bei der Pumpe (19) um eine Förderpumpe handelt, die mit einem Schaltschütz zum automatischen Einschalten bei Erreichen eines bestimmten vordefinierten Wasserstandes sowie mit einem Rückschlagventil und einer Entlüftung ausgestattet ist.

11. Anlage gemäß einem der vorherigen Ansprüche, **dadurch gekennzeichnet, dass** sie ein Steuerungssystem mit einem per Mikrocontroller gesteuerten elektronischen Terminal umfasst (40).

12. Anlage gemäß dem Anspruch 11, **dadurch gekennzeichnet, dass** das Steuerungssystem Hilfsmittel für die Regelung oder Änderung des durch die Betätigung des Abzugs gelieferten Wasservolumens beinhaltet.

13. Anlage gemäß dem Anspruch 11, **dadurch gekennzeichnet, dass** das Steuerungssystem Hilfsmittel für die Steuerung des Wiederauffüllens des Behälters mit Leitungs- oder Schmutzwasser sowie für die Überprüfung und die Anzeige des Zustands des Elektronikanteils der Anlage, der Pumpe und des Filters beinhaltet.

14. Anlage gemäß dem Anspruch 11, **dadurch gekennzeichnet, dass** das Terminal (40) eine Anzeige (41) beinhaltet, z.B. aus Flüssigkristallen, die die Anzeige von Meldungen ermöglicht.

15. Anlage gemäß dem Anspruch 11 oder 12, **dadurch gekennzeichnet, dass** das Steuerungssystem so programmiert ist, dass es regelmäßig das Stellglied des Ablassventils (25A) ansteuert.

16. Anlage gemäß einem der vorherigen Ansprüche, **dadurch gekennzeichnet, dass** die erste Rohrleitung für den Zulauf von Schmutzwasser einen Durchflussregler umfasst.

17. Anlage gemäß einem der vorherigen Ansprüche, **dadurch gekennzeichnet, dass** diese eine ergänzende Rohrleitung (8) umfasst, um den Überlauf des Behälters (3) direkt in einen Ablaufschlauch des WC (2) abfließen zu lassen.

18. Anlage gemäß einem der vorherigen Ansprüche, **dadurch gekennzeichnet, dass** die zweite Rohrleitung für den Zulauf von Leitungswasser in den Behälter vor dem gesteuerten Absperrventil (13) mit einer Vorrichtung zum Sammeln von Regenwasser verbunden ist.

19. Anlage gemäß einem der vorherigen Ansprüche, **dadurch gekennzeichnet, dass** das WC-Becken mit einer Vorrichtung zur Zwangsbelüftung (12) verbunden ist.
